# EUROPÄISCHE PATENTSCHRIFT

(11) **EP 1 845 228 B1**
(45) Veröffentlichungstag und Bekanntmachung des Hinweises auf die Patenterteilung: **09.09.2015**
(21) Anmeldenummer: 07105996.8
(22) Anmeldetag: 12.04.2007
(51) Int. Cl.: E06B 3/24, E06B 3/66, E06B 3/663, E06B 3/673

(54) **Abschlusselement sowie Verfahren zur Herstellung eines Abschlusselements**
Finishing element and method for manufacturing a finishing element
Elément de fermeture tout comme procédé de fabrication d'un élément de fermeture

(30) Priorität: 12.04.2006 DE 102006017603
(43) Veröffentlichungstag der Anmeldung: 17.10.2007
(73) Patentinhaber: GEZE GmbH, 71229 Leonberg (DE)
(72) Erfinder: Alber, Hermann, 70192, Stuttgart (DE)

(56) Entgegenhaltungen:
- EP-A- 0 807 611
- EP-A- 0 875 398
- WO-A-98/58748
- DE-A1- 4 417 172
- DE-U1- 20 205 588
- NL-A- 7 507 807

## Beschreibung

Die Erfindung betrifft ein Verfahren zur Herstellung eines Abschlusselements nach dem Oberbegriff des Patentanspruchs 1.

Aus der EP 0 807 611 A1 ist ein gattungsgemäßes Abschlusselement mit mindestens zwei durchsichtigen, voneinander beabstandet parallelliegenden Scheiben bekannt, die randseitig durch mindestens ein, zumindest teilweise zwischen den Scheiben angeordnetes, den Abstand zwischen den Scheiben ausfüllendes Zwischenelement verbunden sind. Auf die Scheiben ist zumindest in Ihren mit dem Zwischenelement in Überdeckung befindlichen Bereichen mindestens eine dauerhaft aufgebrachte Sichtblende aufgebracht.

Aus der DE 196 34 389 A1 ist ein weiteres Abschlusselement bekannt, welches als aus Isolierglas bestehender Flügel einer Schiebewand ausgebildet ist. Der Flügel weist zwei durchsichtige, voneinander beabstandet parallelliegende, aus Glas bestehende Scheiben auf, die randseitig durch zwischen den Scheiben angeordnete, den Abstand zwischen den Scheiben ausfüllende, als Zwischenlagen bezeichnete Zwischenelemente gehalten sind. Die Scheiben weisen in Ihren mit den Zwischenlagen in Überdeckung befindlichen Bereichen eine Sichtblende auf.

Bei beiden genannten Dokumenten die kann Sichtblende als dauerhafter Aufdruck, beispielsweise als Siebdruck ausgebildet sein. Hierfür sind Siebe notwendig, durch die die Farbe dringt. Die aufgebrachte Lackschicht ist anfällig für Kratzer. Nachteilig ist zudem der Einsatz von Lösungsmitteln, welche zwangsläufig beim Aushärten des Lacks freigesetzt werden und sowohl die mit der Montage des Flügels beschäftigten Personen als auch die Umwelt belasten. Alternativ kann die Sichtblende auch durch Ätzung oder Sandstrahlung hergestellt werden. Auch dies ist aufwändig und bei der Ätzung sogar mit besondern Gefahren für die mit der Montage des Flügels beschäftigten Personen verbunden.

Aus den Druckschriften NL 75 07 807, DE 44 17 172 A1, EP 0 875 398 A2 und WO 98 / 58 748 A1 sind jeweils Verfahren zur Herstellung von Pulverschichtungen bekannt.

Der Erfindung liegt die Aufgabe zugrunde, ein Verfahren zur Herstellung eines Abschlusselements mit den Merkmalen des Oberbegriffs des Patentanspruchs 1 dahingehend weiterzuentwickeln, dass die Herstellung der Sichtblende einfach und schnell durchführbar sowie umweltfreundlich ist.

Die Aufgabe wird durch die Merkmale des Patentanspruchs 1 gelöst. Die Unteransprüche bilden vorteilhafte Ausgestaltungsmöglichkeiten der Erfindung.

Dadurch, dass die Sichtblende über dem Zwischenelement als elektrostatisch aufbringbare Pulverbeschichtung ausgebildet ist, die das Zwischenelement farbig überdeckt, ist ihre Herstellung auf einfache, schnelle und umweltfreundliche Weise möglich: Gegenüber dem Stand der Technik kann auf den Einsatz von Lösungsmitteln völlig verzichtet werden. Das Abschlusselement kann nach dem Aufbringen (Beschichten) der Sichtblende schneller weitermontiert werden (beispielsweise die Verbindung, insbesondere Verklebung der Scheiben mit dem Zwischenelement), da die beim Stand der Technik zu berücksichtigende Aushärtezeit einer Lackierung wegfällt.

Das Zwischenelement des Abschlusselements kann als Tragprofil ausgebildet sein, welches die Scheiben aneinander hält.

Die Verbindung zwischen dem Zwischenelement und den Scheiben als Verklebung ausgebildet sein kann, wobei zusätzlich oder alternativ auch andere Verbindungsarten, beispielsweise eine Verschraubung, möglich sind.

Die Sichtblende kann an der dem Zwischenelement zugewandten Oberfläche der Scheibe angeordnet sein. Hierdurch ergibt sich an der gegenüberliegenden, nach außen gerichteten Oberfläche der Scheibe eine völlig plane Fläche, und die Sichtblende ist durch diese innenliegende Anordnung optimal vor Beschädigungen geschützt.

Alternativ oder zusätzlich kann die Sichtblende aber auch an der dem Zwischenelement abgewandten Oberfläche der Scheibe, d.h. an der nach außen gerichteten Oberfläche des Scheibe angeordnet sein, wobei sich hier die gegenüber Lackierungen höhere Kraftfestigkeit von Pulverbeschichtungen besonders auszeichnet.

Die Sichtblende kann einfarbig, alternativ aber auch als ein ein- oder mehrfarbiges Muster ausgebildet sein. Der Begriff "farbig" umfasst sämtliche Farbtöne des Farbspektrums einschließlich aller möglichen Abstufungen von Grauschattierungen.

Zwischen den Scheiben kann ein zusätzliches Aufnahmeprofil vorhanden sein, welches ebenfalls durch die Sichtblende überdeckt sein kann.

Die Herstellung der Sichtblende auf der Scheibe kann erfolgen, indem zuerst die Scheibe gründlich gereinigt wird, beispielsweise durch eine Glaswäsche mit Wasser (gegebenenfalls mit Additiven, beispielsweise entfettend) und anschließender Trocknung der Scheibe durch Erhitzung. Anschließend wird die nicht mit der Sichtblende zu versehende Fläche der Scheibe abgedeckt, beispielsweise mit einer Folie oder einer Schablone, wobei diese Abdeckung hitzebeständig ausgebildet ist. Die dermaßen vorbereitete Scheibe kann danach auf ein Potenzial, beispielsweise Massepotenzial gelegt werden, gegebenenfalls leicht mit einer leitfähigen Flüssigkeit, einem sogenannten Primer benetzt, welcher beim abschließenden Erhitzen der Scheibe verdampft. Das pulverartige Rohmaterial wird in einer hierfür geeigneten Vorrichtung elektrostatisch aufgeladen, wonach sich das derartig vorbehandelte Rohmaterial von der Fläche der Scheibe angezogen wird und sich dort gleichmäßig absetzt. Alternativ kann die Scheibe in ein elektrostatisches Feld gegeben werden (beispielsweise auf eine plattenförmige Elektrode gelegt), unter dessen Einfluss sich das hinzugegebene, pulverartige Rohmaterial der Beschichtung gleichmäßig auf den zu beschichtenden Fläche der Scheibe anordnet. Anschließend wird die Scheibe gemeinsam mit dem auf ihr angeordneten, pulverartigen Rohmaterial erhitzt (bis auf ca. 200°C), wodurch das Material schmilzt und sich zu einer dauerhaften, in die Oberfläche der Scheibe eingebrannten, die Sichtblende bildenden Beschichtung anordnet. Um eine besonders gute Ausbildung des Randes der Sichtblende zu erreichen, kann der Erhitzungsvorgang dabei kurz unterbrochen werden, nachdem das Material bereits leicht angeschmolzen ist, und die hitzebeständige Abdeckung entfernen (dies wird "angelieren" genannt). Nach dem Erkalten ist die Scheibe sofort weiterverarbeitbar, d.h. mit den weiteren Komponenten verklebbar.

Im Nachfolgenden wird ein Ausführungsbeispiel in der Zeichnung anhand der Figuren näher erläutert.

Dabei zeigen:
- **Fig. 1**: eine dreidimensionale Ansicht der Einzelteile des Abschlusselements vor der Montage;
- **Fig. 2**: ein mit den Teilen gemäß Fig. 1 montiertes Abschlusselement in dreidimensionaler Ansicht;
- **Fig. 3**: eine Schnittdarstellung des montierten Abschlusselements gemäß Fig. 2 im Bereich der Abschlusselementoberkante.

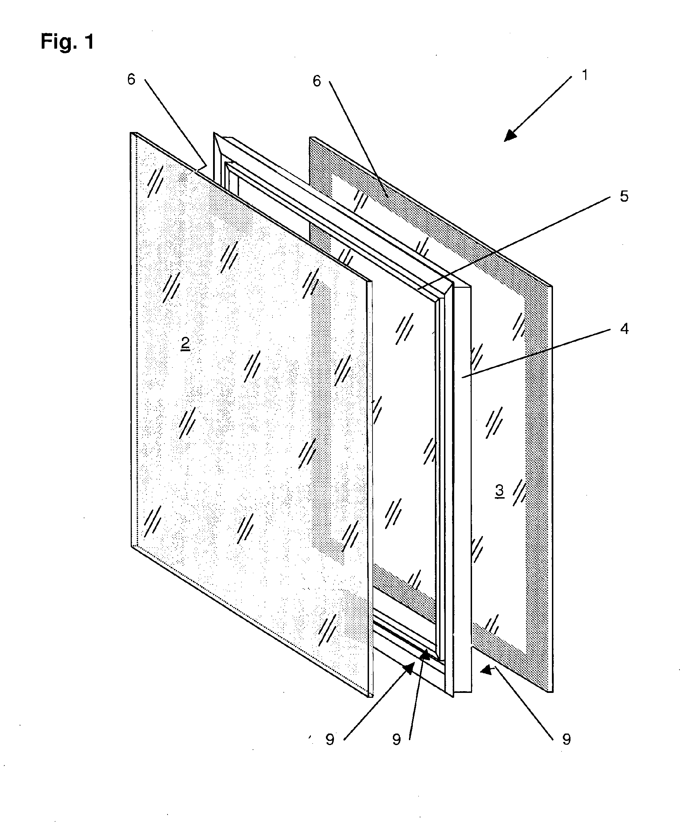

In der **Fig. 1** sind die einzelnen Bestandteile des Abschlusselements 1 vor dessen endgültiger Montage dargestellt. Das Abschlusselement 1 weist zwei parallelliegend beabstandet angeordnete Scheiben 2, 3 aus Glas auf. Bei entsprechender Eignung ist für die Scheiben 2, 3 - anstatt Glas - auch eine Verwendung anderer transparenter Materialien denkbar, z.B. Kunststoff, Plexiglas oder dergleichen. Bei dem dargestellten Ausführungsbeispiel handelt es sich um ein als Drehflügel ve r-wendbares Abschlusselement 1, dessen Scheiben 2, 3 zur Bildung eines Falzes unterschiedlich groß ausgebildet sind. Alternativ hierzu sind aber auch andere (hier nicht dargestellte) Ausführungen, beispielsweise mit gleichgroßen Scheiben 2, 3, möglich.

Zwischen den Scheiben 2, 3 ist ein Zwischenelement angeordnet, welches im Ausführungsbeispiel aus einem umlaufenden Tragprofil 4 besteht.

Ferner ist bei diesem Ausführungsbeispiel ein ebenfalls umlaufendes, vom Tragprofil 4 leicht beabstandet angeordnetes Aufnahmeprofil 5 (sogenannter "Abstandshalter") vorgesehen, welcher innerhalb des vom umlaufenden Tragprofil 4 gebildeten Rahmens zum zwischen den Scheiben 2, 3 befindlichen Zwische n-raum 10 gerichtet ist und ein Lufttrocknungsmittel beinhaltet, welches über in dem Aufnahmeprofil 5 angeordnete, zum Zwischenraum 10 gerichtete Öffnungen mit dem sich im Zwischenraum 10 befindenden, gasförmigen Medium zusammenwi r-ken kann, so dass die Schieben 2, 3 an ihren Innenflächen nicht anlaufen. Das Aufnahmeprofil 5 kann, abweichend von dem dargestellten Ausführungsbeispiel, auch einstückig mit dem Tragprofil 4 ausgebildet sein, wobei das Tragprofil 4 eine ein Lufttrocknungsmittel beinhaltende Kammer aufweisen kann.

Die Scheiben 2, 3 weisen in ihren zur Überdeckung mit dem aus dem Tragprofil 4 bestehenden Zwischenelement kommenden Bereichen jeweils eine Sichtblende 6 auf, welche in diesem Ausführungsbeispiel jeweils an den nach innen gerichteten, d.h. dem Zwischenelement zugewandten Flächen der Scheiben 2, 3 angeordnet sind. Die Sichtblende 6 deckt zudem auch das bei diesem Ausführungsbeispiel vorhandene Aufnahmeprofil 5 ab.

Die Sichtblende 6 ist als Pulverschichtung auf die Flächen der Scheiben 2, 3 aufgebracht. Die Herstellung der Sichtblende 6 auf der Scheibe 2, 3 kann nach folgendem Verfahren erfolgen: Zuerst wird die Scheibe 2, 3 gründlich gereinigt, beispielsweise durch eine Glaswäsche mit Wasser (gegebenenfalls mit Additiven, beispielsweise entfettend) und anschließender Trocknung der Scheibe 2, 3 durch Erhitzung. Anschließend wird die nicht mit der Sichtblende 6 zu versehende Fläche der Scheibe 2, 3 abgedeckt, beispielsweise mit einer Folie oder einer Schablone, wobei diese Abdeckung hitzebeständig ausgebildet ist. Die dermaßen vo r-bereitete Scheibe 2, 3 kann danach auf ein Potenzial, beispielsweise Massepotenzial gelegt werden, gegebenenfalls leicht mit einer leitfähigen Flüssigkeit, einem sogenannten Primer benetzt, welcher beim abschließenden Erhitzen der Scheibe 2, 3 verdampft. Das pulverartige Rohmaterial wird in einer hierfür geeigneten Vorrichtung elektrostatisch aufgeladen, wonach sich das derartig vorbehandelte Rohmaterial von der Fläche der Scheibe 2, 3 angezogen wird und sich dort gleichmäßig absetzt. Alternativ kann die Scheibe 2, 3 in ein elektrostatisches Feld gegeben werden (beispielsweise auf eine plattenförmige Elektrode gelegt), unter dessen Einfluss sich das hinzugegebene, pulverartige Rohmaterial der Beschichtung gleichmäßig auf den zu beschichtenden Fläche der Scheibe 2, 3 anordnet. Anschließend wird die Scheibe gemeinsam mit dem auf ihr angeordneten, pulverartigen Rohmaterial erhitzt (bis auf ca. 200°C), wodurch das Material schmilzt und sich zu einer dauerhaften, in die Oberfläche der Scheibe 2, 3 eingebrannten, die Sichtblende 6 bildenden Pulverbeschichtung anordnet. Um eine besonders gute Ausbildung des Randes der Sichtblende 6 zu erreichen, kann der Erhitzungsvorgang dabei kurz unterbrochen werden, nachdem das Material bereits leicht angeschmolzen ist, und die hitzebeständige Abdeckung entfernen (dies wird "angelieren" genannt). Hierdurch wird ein weicher Übergang der Oberfläche der Beschichtung zu der anschließenden Glasfläche erreicht. Nach dem Erkalten der Pulverbeschichtung ist die Scheibe 2, 3 sofort weiterverarbeitbar, d.h. mit den weiteren Komponenten verklebbar.

Das Tragprofil 4 und das Aufnahmeprofil 5 weisen jeweils zu den Scheiben 2, 3 gerichtete Kontaktflächen 9 auf, auf welche die Verklebung 7, 8 zur Verbindung mit den Scheiben 2, 3 aufbringbar ist. Hierbei muss zumindest die zwischen dem Aufnahmeprofil 5 und den Scheiben 2, 3 aufzubringende Verklebung 8 hermetisch abdichtende Eigenschaften aufweisen (beispielsweise als sogenannte Butylschnur ausgebildet), um den sich zwischen den Scheiben 2, 3 befindenden Zwischenraum luftdicht abzuschließen. Ferner muss zumindest die zwischen dem Tragprofil 4 und den Scheiben 2, 3 aufzubringende Verklebung 7 so ausgebildet sein, dass sie zerstörungsfrei die gegebenenfalls hohen Kräfte aufnehmen kann, welche, abhängig von der Anwendung des Abschlusselements1, über das Tragprofil 4 in Abschlusselement 1 eingeleitet werden können. Sofern die Verklebung 7, 8 beide vorgenannten Eigenschaften (Dichtigkeit und Tragfestigkeit) aufweist, kann sie auch (hier nicht dargestellt) durchgehend, d.h. sowohl im Bereich des Tragprofils 4 als auch im Bereich des Aufnahmeprofils 5 gleich angeordnet sein.

Alternativ oder zusätzlich kann die Verbindung zwischen dem Tragprofil 4 und den Scheiben 2, 3 auch mittels einer von einer Verklebung 7 abweichenden Verbindungsart (hier nicht dargestellt), beispielsweise mittels einer Verschraubung, welche in den Scheiben 2, 3 befindliche Löcher durchgreift und in das Zwische n-element eingreift, hergestellt werden.

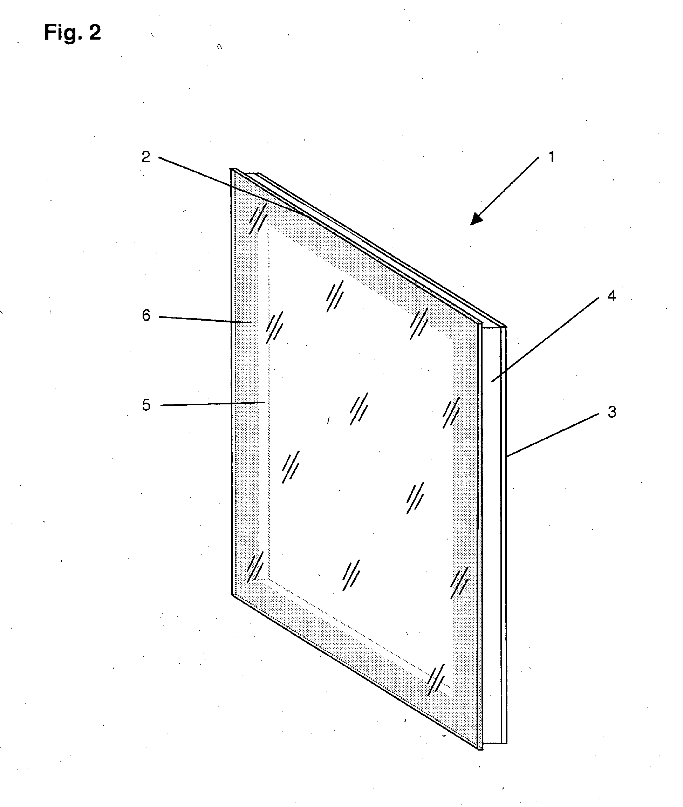

Die **Fig. 2** zeigt das in der Fig. 1 in Einzelkomponenten dargestellten Abschlusselement 1 nach seiner Montage, d.h. nach dem Verkleben der Scheiben 2, 3 mit dem aus dem Tragprofil 4 bestehenden Zwischenelement. Die Scheiben 2, 3 überdecken das Zwischenelement und das Aufnahmeprofil 5 vollständig, so dass die Oberfläche des Abschlusselements 1, welche durch die nach außen gerichteten Flächen der Scheiben 2, 3 gebildet wird, eben ausgebildet ist.

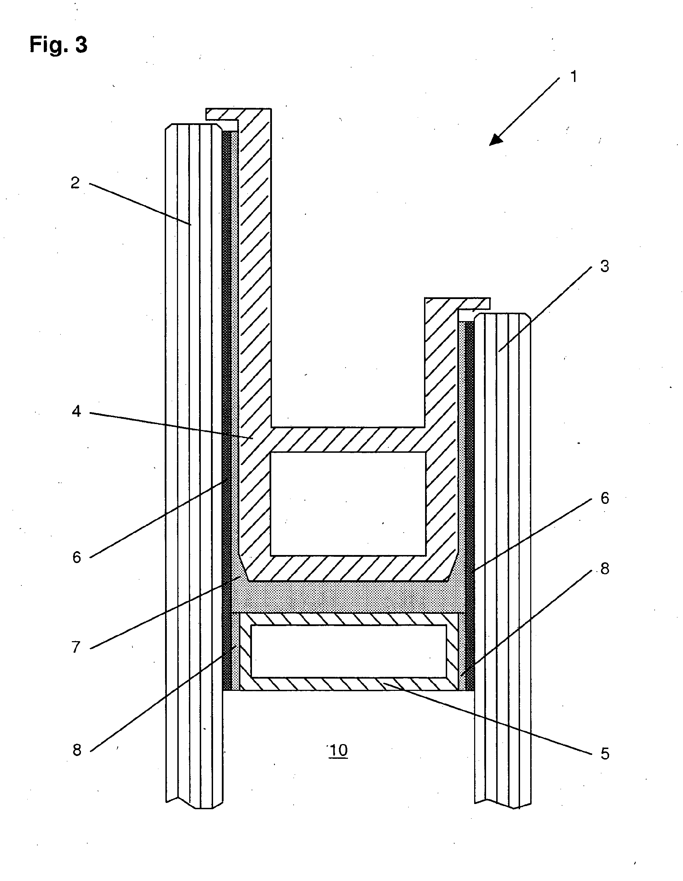

In der **Fig. 3** ist die obere horizontale Kante des Abschlusselements 1 in Schnittdarstellung abgebildet. Die an den zum Zwischenraum 10 gerichteten Innenflächen der Scheiben 2, 3 durch Pulverbeschichtung aufgebrachte Sichtb lende 6 befindet sich in Überdeckung mit dem Tragprofil 4 und dem Aufnahmeprofil 5. Die Verklebung 7, welche das Zwischenelement mit den Scheiben 2, 3 verbindet, wird somit durch die Sichtblende 6 nach außen hin optisch abgedeckt, wobei die nach außen gerichteten Flächen der Scheiben 2, 3 eben sind.

### Liste der Referenzzeichen

- 1: Abschlusselement
- 2: Scheibe
- 3: Scheibe
- 4: Tragprofil
- 5: Aufnahmeprofil
- 6: Sichtblende
- 7: Verklebung
- 8: Verklebung
- 9: Kontaktfläche
- 10: Zwischenraum

## Patentansprüche

1. Verfahren zur Herstellung eines Abschlusselements (1) mit mindestens zwei durchsichtigen, voneinander beabstandet parallelliegenden Scheiben (2, 3), die randseitig durch mindestens ein, zumindest teilweise zwischen den Scheiben (2, 3) angeordnetes, den Abstand zwischen den Scheiben (2, 3) ausfüllendes Zwischenelement verbunden sind,
wobei auf die Scheiben (2, 3) zumindest in Ihren mit dem Zwischenelement in Überdeckung befindlichen Bereichen mindestens eine dauerhaft aufgebrachte Sichtblende (6) aufgebracht wird,
**dadurch gekennzeichnet,**
**dass** die Sichtblende (6) über dem Zwischenelement mittels einer elektrostatisch aufbringbaren Pulverbeschichtung hergestellt wird, die als pulverartiges Rohmaterial auf die Scheiben (2, 3) aufgebracht wird,
indem der Bereich der Scheiben (2, 3), welcher nicht mit der Sichtblende (6) zu versehen ist, vor dem Aufbringen der Pulverbeschichtung mittels mindestens einer entfernbaren Abdeckung abgedeckt wird,
indem anschließend das Rohmaterial der Pulverbeschichtung unter Einfluss mindestens eines elektrischen Feldes auf den Bereich der Scheiben (2, 3), welcher mit der Sichtblende (6) zu versehen sind, aufgebracht wird,
indem anschließend die Scheiben (2, 3) gemeinsam mit dem aufgebrachten Rohmaterial der Pulverbeschichtung erhitzt werden,
indem anschließend die Abdeckung nach dem Aufbringen des Rohmaterials auf die Scheiben (2, 3) entfernt wird, und
indem anschließend nach dem Aufbringen der Pulverbeschichtung die Scheiben (2, 3) durch Verbindung mit dem Zwischenelement zu dem Abschlusselement montiert werden.

2. Verfahren nach Anspruch 1,
**dadurch gekennzeichnet, dass** das Rohmaterial der Pulverbeschichtung vor und/oder bei dem Aufbringen auf die Scheiben (2, 3) elektrostatisch aufgeladen wird.

3. Verfahren nach Anspruch 1,
**dadurch gekennzeichnet, dass** die Scheiben (2, 3) vor und/oder bei dem Aufbringen des Rohmaterials elektrostatisch aufgeladen werden.

4. Verfahren nach Anspruch 1,
**dadurch gekennzeichnet, dass** die Scheiben (2; 3) bei dem Aufbringen des Rohmaterials in einem elektrischen Feld angeordnet sind.

5. Verfahren nach Anspruch 1,
**dadurch gekennzeichnet, dass** zusätzlich mindestens ein Verfahren der Ansprüche 2, 3 oder 4 als weiterer Verfahrensschritt durchgeführt wird.

## Claims

1. Method for making a finishing element (1) with at least two transparent panes (2, 3) parallel to each other and spaced apart, being joined at the margin by at least one intermediate element disposed between the panes (2, 3) and filling up the spacing between the panes (2, 3),
wherein at least one permanently applied screen (6) is arranged on the panes (2, 3) in their regions overlapping with the intermediate element,
**characterized in that**
the screen (6) is produced on the intermediate element by means of an electrostatically applied powder coating, which is applied as a powderlike raw material on the panes (2, 3),
**in that** the region of the panes (2, 3) which is not to be provided with the screen (6) is covered by means of at least one removable cover prior to applying the powder coating,
**in that** the raw material of the powder coating is then applied under influence of at least one electric field to the region of the panes (2, 3) which is to be provided with the screen (6),
**in that** the panes (2, 3) are then heated together with the applied raw material of the powder coating,
**in that** the covering is removed after applying the raw material to the panes (2, 3), and
**in that** the panes (2, 3) after the applying of the powder coating are mounted as the finishing element by connecting to the intermediate element.

2. Method according to claim 1,
**characterized in that** the raw material of the powder coating is electrostatically charged before and/or during the application to the panes (2, 3).

3. Method according to claim 1,
**characterized in that** the panes (2, 3) are electrostatically charged before and/or during the application of the raw material.

4. Method according to claim 1,
**characterized in that** the panes (2, 3) are arranged in an electric field during the application of the raw material.

5. Method according to claim 1,
**characterized in that** at least one of the methods according to claims 2, 3 or 4 is performed as an additional step.

## Revendications

1. Procédé de fabrication d'un élément de fermeture (1) comprenant au moins deux panneaux transparents, situés parallèlement à distance les uns des autres (2, 3), qui sont connectés au niveau des bords par au moins un élément intermédiaire disposé au moins en partie entre les panneaux (2, 3), remplissant la distance entre les panneaux (2, 3),
au moins un cache (6) appliqué de manière durable étant appliqué sur les panneaux (2, 3) au moins dans leurs régions recouvrant l'élément intermédiaire,
**caractérisé en ce que**
le cache (6) est fabriqué par-dessus l'élément intermédiaire au moyen d'un revêtement de poudre pouvant être appliqué par voie électrostatique, qui est appliqué sous forme de matière première pulvérulente sur les panneaux (2, 3),
la région des panneaux (2, 3) qui ne doit pas être pourvue du cache (6) étant recouverte au moyen d'au moins un revêtement amovible avant l'application du revêtement de poudre,
la matière première du revêtement de poudre étant ensuite appliquée sous l'influence d'au moins un champ électrique sur la région des panneaux (2, 3) qui doit être pourvue du cache (6),
les panneaux (2, 3) étant ensuite chauffés conjointement avec la matière première appliquée du revêtement de poudre,
le revêtement étant ensuite retiré après l'application de la matière première sur les panneaux (2, 3), et
les panneaux (2, 3) étant ensuite montés pour former l'élément de fermeture après l'application du revêtement de poudre, par connexion à l'élément intermédiaire.

2. Procédé selon la revendication 1,
**caractérisé en ce que** la matière première du revêtement de poudre est chargée par voie électrostatique avant et/ou lors de l'application sur les panneaux (2, 3).

3. Procédé selon la revendication 1,
**caractérisé en ce que** les panneaux (2, 3) sont chargés par voie électrostatique avant et/ou lors de l'application de la matière première.

4. Procédé selon la revendication 1,
**caractérisé en ce que** les panneaux (2, 3) sont disposés dans un champ électrique lors de l'application de la matière première.

5. Procédé selon la revendication 1,
**caractérisé en ce qu'**au moins un procédé selon les revendications 2, 3 ou 4 est en outre mis en oeuvre en tant qu'étape de procédé supplémentaire.
